# EUROPEAN PATENT APPLICATION

(11) **EP 2 617 989 A1**
(43) Date of publication of application: **24.07.2013**
(21) Application number: 12151512.6
(22) Date of filing: 18.01.2012
(51) Int. Cl.: F03D 1/04, F03D 11/04

(54) **Rear-mounted vehicular wind power generator system**

(71) Applicant: Chen, Chung-Hsien, Taipei (TW)
(72) Inventor: Chen, Chung-Hsien, Taipei (TW)
(74) Representative: Viering, Jentschura & Partner

(57) **Abstract**

A rear-mounted vehicular power generator system comprises a power generator, a blade wheel, a power generator shaft, an air guiding hood, wires, and fixed terminals. The vehicular wind power generator system is mounted in the rear of a vehicle. When the vehicle is running, air flows through the air guiding hood and drives the blade wheel to rotate. The power generator shaft, which is fixed to the blade wheel, rotates together with the blade wheel and drives the power generator to generate electric energy. The electric energy is stored in a battery for various applications. The present invention is **characterized in that** the vehicular wind power generator system is mounted in the rear of a vehicle, neither hindering vision of the driver nor impairing balance of the vehicle running at high speed.

## Description

### BACKGROUND OF THE INVENTION

### Field of the Invention

The present invention relates to a wind power generator integrated with a vehicle, particularly to a power generator mounted in the rear of a vehicle and driven to generate power by the wind created by the running vehicle.

### Description of the Related Art

At present, the vehicular wind power generator is normally mounted in the front or top of a vehicle. If the wind power generator is mounted in the front of a vehicle and has large blades, the blades should hinder vision of the driver. Therefore, the size of the front-mounted vehicular wind power generator must be limited lest it hinder the vision of the driver. Thus is also limited the capacity of the front-mounted vehicular wind power generator. If the wind power generator is mounted in the top of a vehicle, the balance of the vehicle would be affected when the vehicle is running at high speed.

Therefore, it is inappropriate to mount a wind power generator in the front or top of a vehicle.

Accordingly, the present invention proposes a rear-mounted vehicular power generator, which was not found in the prior arts, and which achieves high power generation efficiency without impairing the balance of the vehicle.

### SUMMARY OF THE INVENTION

The present invention proposes a rear-mounted vehicular wind power generator system to overcome the abovementioned problems of the conventional vehicular wind power generator. The vehicular wind power generator system of the present invention is mounted in the rear of a vehicle and comprises a power generator, a blade wheel, a power generator shaft, an air guiding hood, wires, and fixed terminals. When the vehicle is running, air flows through the air guiding hood and drives the blade wheel to rotate. The power generator shaft is fixed to the blade wheel and transmits dynamic energy to the power generator, whereby the power generator generates electric energy. The electric energy is stored in a battery for various applications. The present invention is **characterized in that** the wind power generator system is mounted in the rear of a vehicle, neither hindering vision of the driver nor impairing balance of the vehicle.

In detail, the rear-mounted vehicular wind power generator system of the present invention is mounted in the rear of a vehicle and comprises
a power generator having a power generator shaft;
a blade wheel fixed to the power generator shaft and rotated by wind to drive the power generator to generate electric power;
an air guiding hood arranged outside the power generator, having a smooth and streamline surface, and used to guide air stream; and
wires having terminals connected with the power generator and having fixed terminals connected with a battery or a related device.

### BRIEF DESCRIPTION OF THE DRAWINGS

Fig.1 is a perspective view schematically showing a rear-mounted vehicular power generator system according to one embodiment of the present invention;
Fig.2 is a perspective view schematically showing the air stream guiding of a rear-mounted vehicular power generator system according to one embodiment of the present invention; and
Fig.3 is a diagram schematically showing the application of a rear-mounted vehicular power generator system according to one embodiment of the present invention.

### DETAILED DESCRIPTION OF THE INVENTION

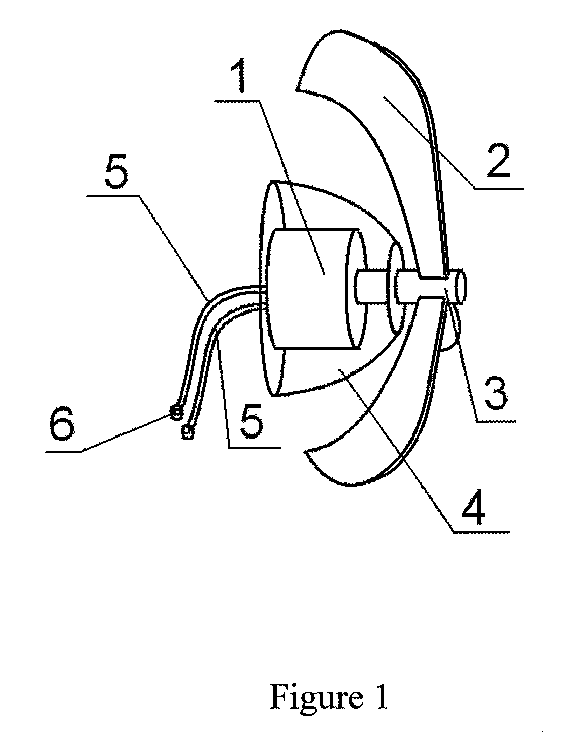

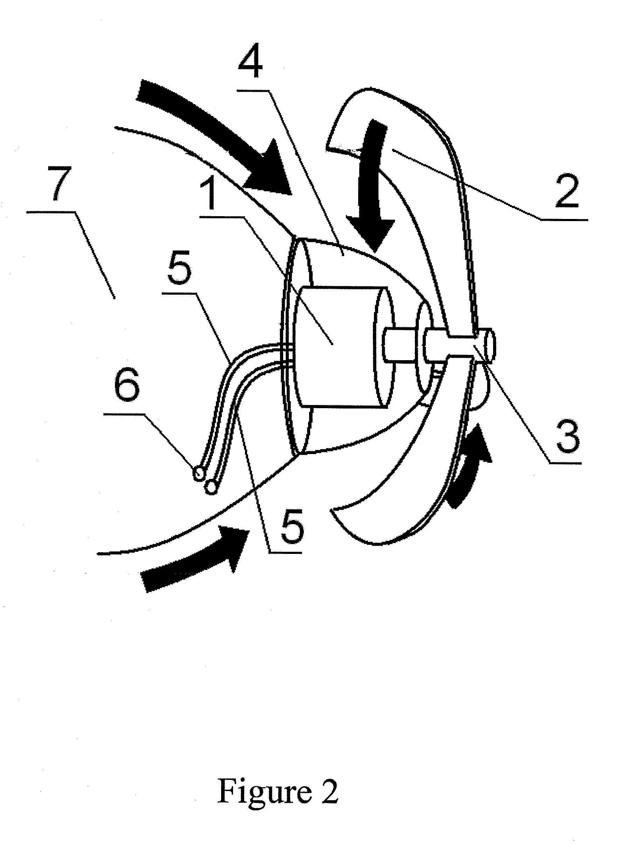

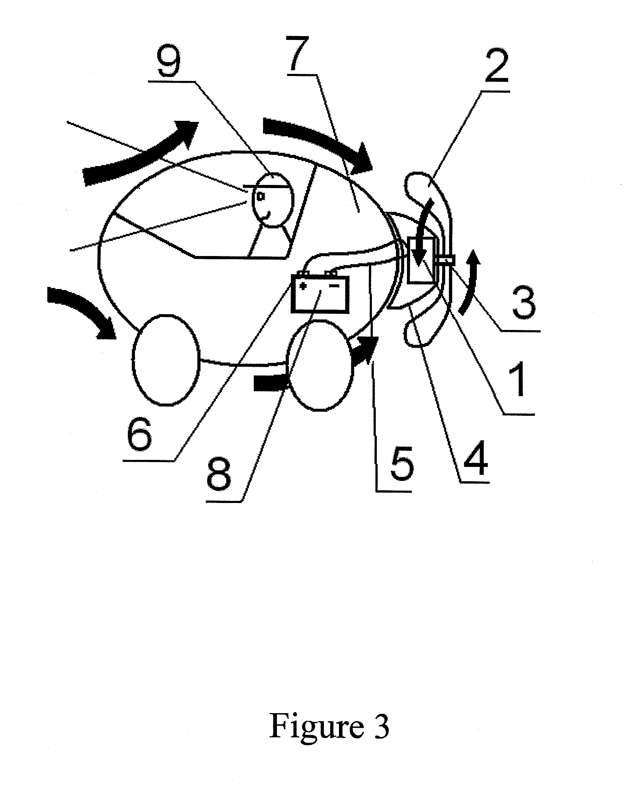

Refer to Fig.1, Fig.2 and Fig.3. The present invention discloses a rear-mounted wind power generator system, which comprises a power generator 1, a blade wheel 2, a power generator shaft 3, an air guiding hood 4, wires 5 and fixed terminals 6.

Below is described in detail the components of the rear-mounted vehicular wind power generator system of the present invention and the connection relationship thereof. The vehicular wind power generator system of the present invention is mounted in the rear of a vehicle 7. The wind power generator system has a power generator 1, and the power generator 1 has a power generator shaft 3. A blade wheel 2 is fixed to the power generator shaft 3 and rotated by wind. The power generator shaft 3 is rotated by the blade wheel 2 to drive the power generator 1 to generate electric energy. An air guiding hood 4 has a smooth and streamline surface and is arranged outside the power generator 1 for guiding air stream. The power generator 1 is connected with wires 5. The wires 5 have fixed terminals 6 connected with a battery 8 or a related device.

While the vehicle 7 is running forward, the air guiding hood 4 guides air stream to the blade wheel 2. The air stream drives the blade wheel 2 to rotate. The power generator shaft 3, which is fixed to the blade wheel 2, rotates together with the blade wheel 2 and drives the power generator 1 to generate electric energy. The electric energy is stored in the battery 8 for various applications.

Therefore, the present invention is **characterized in that** the vehicular wind power generator system is mounted in the rear of the vehicle 7, neither hindering vision of the driver 9 nor impairing balance of the vehicle 7 running at high speed.

The embodiments described above are only to exemplify the present invention but not to limit the scope of the present invention. Any equivalent modification or variation according to the spirit of the present invention is to be also included within the scope of the present invention.

## Claims

1. A rear-mounted vehicular power generator system, which is mounted in a rear of a vehicle, comprising
a power generator having a power generator shaft;
a blade wheel fixed to said power generator shaft and rotated by wind to drive said power generator to generate electric energy;
an air guiding hood arranged outside said power generator to guide air stream; and
wires having terminals connected with said power generator and having fixed terminals connected with a battery or a related device.

2. The rear-mounted vehicular power generator system according to claim 1, wherein said air guiding hood has a smooth and streamline surface.
